(19) Europäisches Patentamt
European Patent Office
Office européen des brevets

(11) **EP 4 376 327 A1**

(12) **EUROPEAN PATENT APPLICATION**
published in accordance with Art. 153(4) EPC

(43) Date of publication:
**29.05.2024 Bulletin 2024/22**

(21) Application number: **22864161.9**

(22) Date of filing: **03.08.2022**

(51) International Patent Classification (IPC):
**H04B 17/30** (2015.01)    **G01W 1/02** (2006.01)

(52) Cooperative Patent Classification (CPC):
**G01W 1/02; H04B 17/30;** Y02A 90/10

(86) International application number:
**PCT/JP2022/029776**

(87) International publication number:
**WO 2023/032575 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021  JP 2021140184**

(71) Applicant: **NEC Corporation**
**Tokyo 108-8001 (JP)**

(72) Inventor: **YOKOTA Nobuyuki**
**Tokyo 108-8001 (JP)**

(74) Representative: **Vossius & Partner**
**Patentanwälte Rechtsanwälte mbB**
**Siebertstraße 3**
**81675 München (DE)**

(54) **ANTENNA DIRECTION CALCULATION DEVICE, PROCESSING METHOD, AND RECORDING MEDIUM**

(57)    An antenna direction calculation device acquires a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data. The antenna direction calculation device generates, using the plurality of relationships and a machine learning technique, a direction calculation model that, upon receiving an input of weather data on the radio wave communication path, outputs a reception direction for the receiving-side antenna, using the plurality of relationships and a machine learning technique.

FIG. 1

**Description**

TECHNICAL FIELD

The present disclosure relates to an antenna direction calculation device, a processing method, and a recording medium.

BACKGROUND ART

There is a technique for performing non-line-of-sight radio wave communication between a transmitting point and a receiving point that are separated by mountainous areas or the like where radio waves do not reach the destination directly. In such a technique, in some cases, a transmitting-side antenna at the transmitting point and a receiving-side antenna at the receiving point are directly facing each other, and each antenna is directed toward the other antenna or toward the vicinity of the summit of a mountainous area in the direction of the other antenna. The transmitting-side antenna and receiving-side antenna used for such radio wave communication are of large antenna diameters, and use high-output power amplifiers. Non-line-of-sight radio wave communication is sometimes called OH communication (Over the Horizon communication).
Techniques relevant to this are disclosed in Patent Document 1 and Patent Document 2. Patent Document 1 discloses a technique for estimating radio wave propagation loss at a reception height that makes measuring in an OH communication environment difficult. Patent Document 2 discloses to search for a radio wave propagation path from topographic map information in OH communication.

Prior Art Documents

Patent Documents

Patent Document 1: Japanese Unexamined Patent Application, First Publication No. 2014-45285
Patent Document 2: Japanese Unexamined Patent Application, First Publication No. 2011-234140

SUMMARY OF THE INVENTION

Problems to be Solved by the Invention

In radio communication as described above, the refractive index in the tropospheric radio wave scattering space changes depending on the atmospheric conditions, which causes the state of radio wave propagation to change, and a significant amount of effort is required to sequentially change the appropriate antenna direction with little propagation loss.
An example object of the present disclosure is to provide an antenna direction calculation device, a processing method, and a recording medium capable of solving the above problem.

Means for Solving the Problem

According to a first example aspect of the present disclosure, an antenna direction calculation device includes: an acquisition means that acquires a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and a direction calculation model generation means that generates, using the plurality of relationships and a machine learning technique, a direction calculation model that, upon receiving an input of weather data on the radio wave communication path, outputs a reception direction for the receiving-side antenna, using the plurality of relationships and a machine learning technique.
According to a second example aspect of the present disclosure, a processing method includes: acquiring a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and generating, using the plurality of relationships and a machine learning technique, a direction calculation model that, upon receiving an input of weather data on the radio wave communication path, outputs a reception direction for the receiving-side antenna, using the plurality of relationships and a machine learning technique.

According to a third example aspect of the present disclosure, a recording medium stores a program that causes a computer of an antenna direction calculation device to execute: acquiring a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and generating, using the plurality of relationships and a machine learning technique, a direction calculation model that, upon receiving an input of weather data on the radio wave communication path, outputs a reception direction for the receiving-side antenna, using the plurality of relationships and a machine learning technique.

Effect of Invention

According to the present disclosure, even when the state of radio wave propagation changes due to the atmospheric state, it is possible to effortlessly calculate an appropriate antenna direction with little propagation loss.

BRIEF DESCRIPTION OF THE DRAWINGS

[FIG. 1] FIG. 1 is a diagram showing a configuration of a radio wave communication system in which an antenna direction calculation device according to the present example embodiment calculates an antenna direction.
[FIG. 2] FIG. 2 is a hardware configuration diagram of the antenna direction calculation device according to the present example embodiment.
[FIG. 3] FIG. 3 is a functional block diagram of the antenna direction calculation device according to the present example embodiment.
[FIG. 4] FIG. 4 is a diagram showing an overview of processing of the antenna direction calculation device according to the present example embodiment.
[FIG. 5] FIG. 5 is a diagram showing an example of information recorded by the antenna direction calculation device according to the present example embodiment.
[FIG. 6] FIG. 6 is a diagram showing a processing flow of the antenna direction calculation device according to the present example embodiment.
[FIG. 7] FIG. 7 is a diagram showing a configuration example of an antenna direction calculation device according to the present example embodiment.
[FIG. 8] FIG. 8 is a diagram showing a processing flow of the antenna direction calculation device shown in FIG. 7.

EXAMPLE EMBODIMENT

Hereinafter, an antenna direction calculation device according to an example embodiment of the present disclosure will be described, with reference to the drawings.

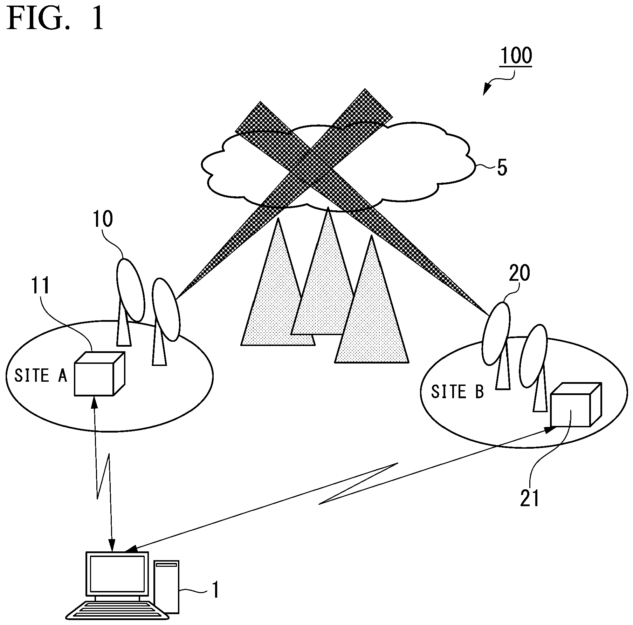

FIG. 1 is a diagram showing a configuration of a radio wave communication system in which an antenna direction calculation device according to the present example embodiment calculates an antenna direction.
As shown in FIG. 1, at each of site A and site B separated by a mountainous region or the like, a radio wave communication system 100 has radio communication equipment comprising an antenna and a radio control device. A first radio facility at the site A includes an antenna 10 and a radio control device 11. A second radio facility at the site B includes an antenna 20 and a radio control device 21. An antenna direction calculation device 1 may be communicatively connected to the radio control device 11 and the radio control device 21.
When one of the antennas 10, 20 transmits transmission radio waves, the other of the antennas 10, 20 receives diffracted waves that have gone around obstacles such as mountainous areas, and reflected waves that have been reflected by the obstacles. As a result, OH communication, which is radio communication with no line-of-sight, is performed between the antenna 10 and the antenna 20. The antennas 10, 20 may also perform OH communication in a state where there are no obstacles such as mountainous areas between the antennas 10, 20 that constitute the radio wave communication system 100. The radio control device 11 controls the signal amplification and output power of the antenna 10, the transmission and reception directions of the transmission and reception radio waves, and so forth. The radio control device 21 controls the signal amplification and output power of the antenna 20, the transmission and reception directions of the transmission and reception radio waves, and so forth. The antenna direction calculation device 1 is a computer device provided to calculate the directions of the antenna 10 and the antenna 20. Specifically, the antenna direction calculation device 1 acquires a plurality of relationships between: weather data on a radio wave communication path between the installation position of a transmitting-side antenna and the installation position of a receiving-side antenna; and an optimal reception direction for the receiving-side antenna in a case where the radio wave transmission direction of the transmitting-side antenna is a predetermined transmission direction and also where the weather data is observed. The antenna direction calculation device 1 generates a direction calculation model that, upon receiving an input of weather data on the radio wave communication path and radio wave transmission direction of the transmitting-side antenna, outputs a reception direction for the receiving-side antenna, using the plurality of relationships between: the weather data on the radio wave communication path; and the optimal reception direction for the receiving-side antenna in a case where the radio wave transmission direction of the transmitting-side antenna is the predetermined transmission direction and also where the weather data is observed, and a machine learning technique. The antenna direction calculation device 1 calculates the reception direction of the receiving-side antenna, based on the weather data on the radio wave communication path, the radio wave transmission direction of the transmitting-side antenna, and the direction calculating model.

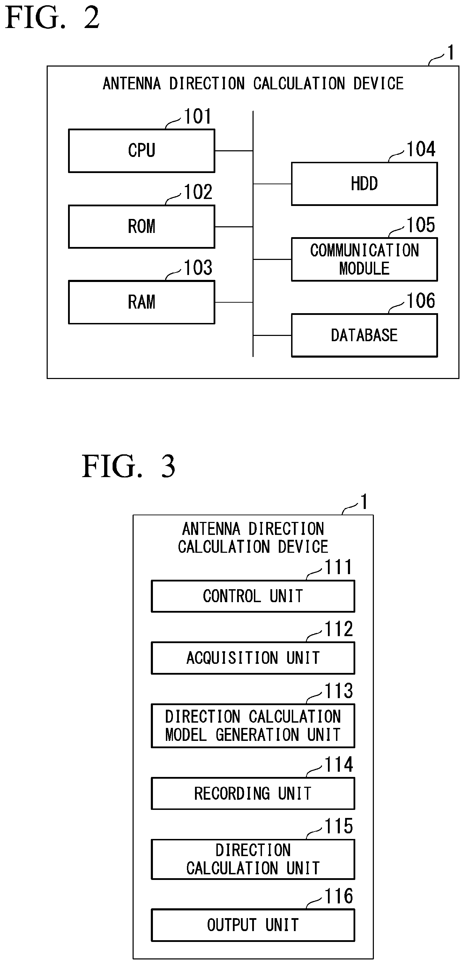

FIG. 2 is a hardware configuration diagram of the antenna direction calculation device according to the present example embodiment.

As shown in FIG. 2, the antenna direction calculation device 1 is a computer that includes hardware units such as a CPU (Central Processing Unit) 101, a ROM (Read Only Memory) 102, a RAM (Random Access Memory) 103, a HDD (Hard Disk Drive) 104, a communication module 105, and a database 106. The radio control device 11 and the radio control device 21 may also have a similar hardware configuration.

FIG. 3 is a function block diagram of the antenna direction calculation device according to the present example embodiment.

The antenna direction calculation device 1 executes a processing program. The antenna direction calculation device 1 serves the functions of a control unit 111, an acquisition unit 112, a direction calculation model generation unit 113, a recording unit 114, a direction calculation unit 115, and an output unit 116.

The control unit 111 controls respective functional units of the antenna direction calculation device 1.

The acquisition unit 112 acquires various data that the antenna direction calculation device 1 uses for processing. For example, the acquisition unit 112 acquires; weather data on a radio wave communication path between the installation position of a transmitting-side antenna and the installation position of a receiving-side antenna, and a relationship between: weather data; and an optimal reception direction for the receiving-side antenna in a case where the radio wave transmission direction of the transmitting-side antenna is a predetermined transmission direction and also where the weather data is observed.

The direction calculation model generation unit 113 uses the data acquired by the acquisition unit 112 and a machine learning technique to generate a direction calculation model that outputs a reception direction of the receiving-side antenna.

The recording unit 114 records information acquired by the acquisition unit 112 and information of the direction calculation model generated by the direction calculation model generation unit 113.

The direction calculation unit 115 calculates the reception direction of the receiving-side antenna, based on the weather data on the radio wave communication path, the radio wave transmission direction of the transmitting-side antenna, and the direction calculating model.

The output unit 116 outputs an optimal antenna direction when a predetermined transmitting-side antenna and receiving-side antenna perform radio wave communication, based on an instruction from a terminal or the like used by a user.

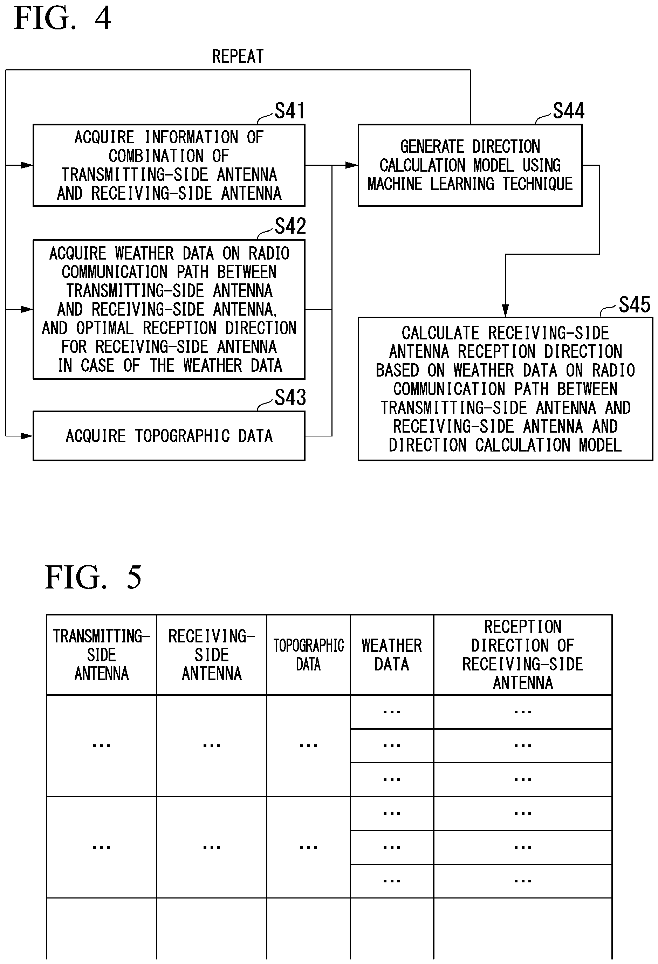

FIG. 4 is a diagram showing an overview of the processing of the antenna direction calculation device according to the present example embodiment.

The antenna direction calculation device 1 acquires information on a combination of a transmitting-side antenna and a receiving-side antenna in advance (Step S41). Also, the antenna direction calculation device 1 acquires weather data on a radio wave communication path between the installation position of the transmitting-side antenna and the installation position of the receiving-side antenna, and an optimal receiving direction for the receiving-side antenna in which the lowest propagation loss and the highest received power value are achieved during radio wave communication when the weather data is observed (Step S42). Also, the antenna direction calculation device 1 acquires ground topographic data corresponding to a radio wave communication path between the installation position of a transmitting-side antenna and the installation position of a receiving-side antenna (Step S43). This topographic data may be information acquired from a terminal device or the like used by an administrator or the like. The topographical data may include; the coordinates (latitude, longitude, altitude) and distances of the transmitting-side antenna and the receiving-side antenna, the coordinates (latitude, longitude, altitude) of the summit of the mountainous area between the antennas, and the coordinates (latitude, longitude, altitude) of points at predetermined intervals on the straight line between the antennas. The antenna direction calculation device 1 acquires a plurality of optimal reception directions for the receiving-side antenna, for each combination of: the transmitting-side antenna and the receiving-side antenna; and weather data on the radio wave communication path between the antennas. This optimal reception direction may be information of the reception direction determined by the radio control device 11 or the radio control device 21 during the control of the antenna direction performed in the past. The antenna direction calculation device 1 generates a direction calculating model that outputs a reception direction of the receiving-side antenna, using a plurality of optimal reception directions for the receiving-side antenna, for each combination of: the transmitting-side antenna and the receiving-side antenna; and weather data on the radio wave communication path between the antennas, and a machine learning technique (Step S44).

It should be noted that the direction of the transmitting-side antenna at this time may be a predetermined direction. The predetermined direction of the transmitting-side antenna may be a direction at the time when the transmitting-side antenna and the receiving-side antenna are directly facing each other and the transmitting-side antenna is directed toward the receiving-side antenna. Alternatively, if there is a mountainous area between the transmitting-side antenna and the receiving-side antenna, the predetermined direction of the transmitting-side antenna may be a direction toward the summit of the mountainous area at the time when the transmitting-side antenna and the receiving-side antenna are directly facing each other and the transmitting-side antenna is directed toward the receiving-side antenna. Alternatively, the direction of the transmitting-side antenna may be a predetermined direction in which the received power level is high at the receiving-side antenna, or a direction in which propagation loss is low when performing radio wave communication with the receiving-side antenna. The antenna direction calculation device 1 calculates the reception direction of the receiving-side antenna based on at least; the weather data on the radio wave communication path between the transmitting-side antenna and the receiving-side antenna, and the direction calculating model (Step S45).

FIG. 5 is a diagram showing an example of information recorded by the antenna direction calculation device.

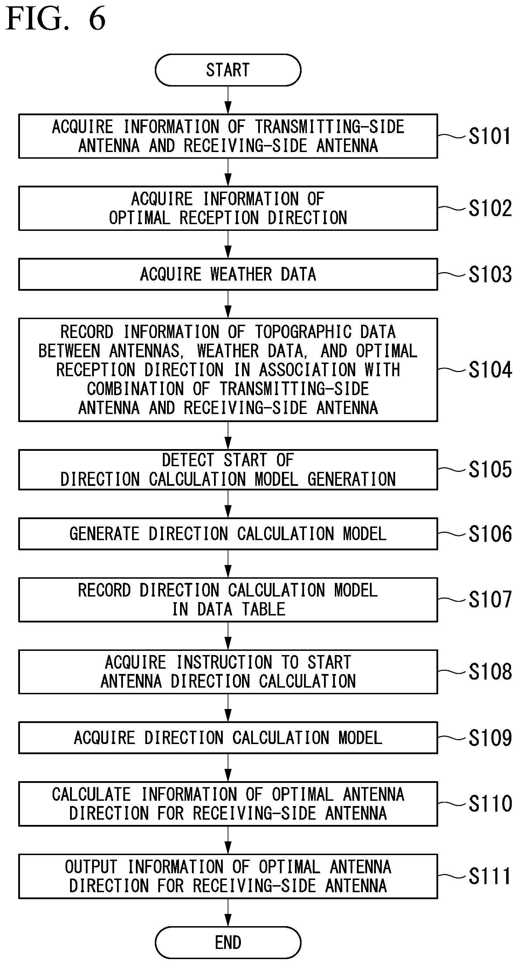

FIG. 6 is a diagram showing a processing flow of the antenna direction calculation device.

Hereinafter, the processing flow of the antenna direction calculation device according to the present example embodiment will be described.

The antenna direction calculation device 1 acquires, from a terminal device or the like used by a user, information on a transmitting-side antenna and a receiving-side antenna that are the processing target (Step S101). Assume that the transmitting-side antenna is the antenna 10 and the receiving-side antenna is the antenna 20. In such a case, the acquisition unit 112 of the antenna direction calculation device 1 acquires, from the radio control device 11 controlling the antenna 10, which is a transmitting-side antenna, and the radio control device 21 controlling the antenna 20, which is a receiving-side antenna, information of the optimal reception direction in which the radio wave reception level is the highest or the propagation loss is the lowest when the antenna 10 or the antenna 20 is the receiving-side antenna (Step S102). The information of the reception direction may be, for example, the angle or direction from the reference direction when the receiving-side antenna is oriented horizontally in the direction of the transmitting-side antenna. The information of the optimal reception direction may be information of the reception direction in a case where the radio control device 11 or the radio control device 21 controlling the receiving-side antenna controls the reception direction of the receiving-side antenna, and the radio wave reception level becomes equal to or higher than a predetermined threshold value or the propagation loss becomes equal to or less than a predetermined threshold value.

The acquisition unit 112 acquires weather data on the radio wave communication path between the transmitting-side antenna and the receiving-side antenna when radio wave communication is performed in such a receiving direction (Step S103). This weather data may be weather data at predetermined intervals such as 10 km or 100 km on the ground surface on the radio wave communication path. The weather data may include at least one or more pieces of information such as absolute temperature T (°K), atmospheric pressure P (mb), saturated water vapor pressure es (mb), and relative humidity H (%). The recording unit 114 records in a data table of the database 106 (see FIG. 5) the information of the topographic data, the weather data, and the optimal reception direction between the antennas, acquired by the acquisition unit 112 while associating them with the combination of the transmitting-side antenna and the receiving-side antenna specified by the user (Step S104). Thereafter, the recording unit 114 repeatedly acquires weather data between the antennas and information of the optimal reception direction according to the combination of the transmitting-side antenna and the receiving-side antenna specified by the user, and records it in the data table. The recording unit 114 may record these pieces of information in association with date data indicating a period indicating a **season** acquired from the acquisition unit 112 based on an instruction from an administrator or the like.

When a certain amount of information is accumulated in the data table, the control unit 111 of the antenna direction calculation device 1 instructs the direction calculation model generation unit 113 to generate a direction calculating model. At this time, the control unit 111 acquires the combination of the transmitting-side antenna and the receiving-side antenna specified by the user from the terminal device used by the user, and outputs the information of the combination of the transmitting-side antenna and the receiving-side antenna to the direction calculation model generation unit 113. The direction calculation model generation unit 113 detects the start of direction calculation model generation, based on an instruction (Step S105). The direction calculation model generation unit 113 acquires a plurality of combinations of topographical data, weather data, and an optimal reception direction for the receiving-side antenna when the weather data is observed, recorded in the data table in association with each identification information of the transmitting-side antenna and the receiving-side antenna. The direction calculation model generation unit 113 generates a direction calculating model that takes an input of topographical data and weather data, outputs an optimal reception direction for the receiving-side antenna when the weather data is observed, and performs machine learning using multiple input/output relationships (Step S106).

Note that the direction calculation model generation unit 113 may use weather data to estimate the refractive index No of radio waves in a radio wave scattering space 5 where tropospheric scattering occurs at an altitude between 10 km to 15 km, and may perform the machine learning mentioned above using weather data including the refractive index No to generate a direction calculation model. The refractive index No of radio waves in a radio wave scattering space can be calculated as in Equation (1), using an absolute temperature T (°K), an atmospheric pressure P (mb), a saturated water vapor pressure es (mb), and a relative humidity H (%), for example.

[Equation 1]

$$No = \frac{77.6}{T} \cdot \left( P + \frac{48.10 \cdot esH}{T} \right) \qquad \cdots (1)$$

The reception direction may be represented, for example, as an angle or a three-dimensional vector from the reference position of the receiving-side antenna. This machine learning technique may use an estimation model such as a hidden Markov model. Alternatively, the direction calculation model generation unit 113 may generate the direction calculation model using another machine learning technique. The direction calculation model is a machine learning model for, upon receiving an input of topographic data and weather data, calculating (outputting) an optimal reception direction for the receiving-side antenna when the weather data is observed. This direction calculation model may be a set of data including weight coefficients that forms a neural network, for example.

The acquisition unit 112 may instruct the direction calculation model generation unit 113 to re-generate the direction calculation model in the case where, in accordance with the combination of a transmitting-side antenna and a receiving-side antenna, weather data between these antennas and information of the optimal reception direction have been repeatedly acquired, and also where a predetermined period has elapsed since the previous direction calculation model generation. The direction calculation model generation unit 113 may repeatedly generate the direction calculation model using the same technique mentioned above, based on a regeneration instruction. The recording unit 114 records the direction calculation model in the data table in association with the information of the combination of the transmitting-side antenna and the receiving-side antenna (Step S107). As a result, the antenna direction calculation device 1 can store in the database 106, the direction calculation model for calculating information of the reception direction for the receiving-side antenna that is optimal in accordance with the combination of the transmitting-side antenna and the receiving-side antenna, and the weather data.

When actually calculating the antenna direction for the receiving-side antenna, the administrator inputs into the antenna direction calculation device 1 an instruction to start antenna direction calculation including information indicating the combination of the transmitting-side antenna and the receiving-side antenna, and weather data, and the antenna direction calculation device 1 acquires the instruction (Step S108). The weather data may be current weather data or assumed weather data. The direction calculation unit 115 acquires the direction calculation model recorded in the database 106 in association with the information indicating the combination of the transmitting-side antenna and the receiving-side antenna (Step S109). The direction calculation unit 115 inputs the weather data to the direction calculation model, and calculates information of the optimal antenna direction for the receiving-side antenna when the weather data is observed (Step S110). The output unit 116 outputs the information of the optimal antenna direction for the receiving-side antenna to the terminal device used by the administrator (Step S111). Thereby, the administrator can obtain information of an appropriate antenna direction for the receiving-side antenna according to the specified combination of the transmitting-side antenna and the receiving-side antenna and the current weather data.

While radio wave communication is performed between the transmitting-side antenna and the receiving-side antenna, the direction calculation unit 115 of the antenna direction calculation device 1 may calculate the information of the optimal antenna direction for the receiving-side antenna when the weather data is currently observed, through the processing described above and at predetermined time intervals. The output unit 116 may output information of the optimal antenna direction for the receiving-side antenna calculated by the direction calculation unit 115, to the radio control device 11 or the radio control device 21 that controls reception direction. As a result, the radio control device 11 or the radio control device 21 can control the reception direction of the antenna to an appropriate direction according to the current weather data between the antennas.

In the generation of the direction calculation model performed by the direction calculation model generation unit 113 described above, it is assumed that the direction of the transmitting-side antenna is a predetermined direction. However, the direction calculation model generation unit 113 may generate a direction calculation model for calculating the reception direction for the receiving-side antenna according to a different transmission direction of the transmitting-side antenna and weather data. In such a case, in the direction calculation model generation process described above, the direction calculation model generation unit 113 acquires a plurality of combinations of; topographical data, weather data, a direction in which the transmitting-side antenna is oriented, and an optimal reception direction for the receiving-side antenna measured in the past when the weather data and the direction of the transmitting-side antenna are observed, that are recorded in the data table in association with each identification information of the transmitting-side antenna and the receiving-side antenna. The direction calculation model generation unit 113 generates a direction calculating model that takes an input of topographical data, weather data, and the direction of the transmitting-side antenna, outputs an optimal reception direction for the receiving-side antenna when the weather data and the direction of the transmitting-side antenna are observed, and performs machine learning using multiple input/output relationships. In such a case, the recording unit 114 records the direction calculation model in the data table in association with the information of the combination of the transmitting-side antenna, the receiving-side antenna, and the direction of the transmitting-side antenna. Also, in such a case, the direction calculation unit 115 may acquire the direction calculation model recorded in the database 106 in association with the information indicating the combination of the transmitting-side antenna, the receiving-side antenna, and the direction of the transmitting-side antenna, and input weather data to the direction calculating model to calculate information of the optimal antenna direction for the receiving-side antenna when the weather data is observed.

The direction calculation model generation unit 113 may further generate a direction calculation model according to the period indicating a season. In such a case, the direction calculation model is generated for each period (predetermined period) indicating a season, as with the processing described above. The recording unit 114 further records in the database 106, the direction calculation model generated as a model corresponding to the period, in association with the information of the period indicating a season. Also, in such a case, the direction calculation unit 115 may acquire the direction calculation model recorded in the database 106 in association with the information indicating the combination of the transmitting-side antenna, the receiving-side antenna, the direction of the transmitting-side antenna, and the season, and input weather data to the direction calculating model to calculate information of the optimal antenna direction for the receiving-side antenna when the season and the weather data are observed.

Through the processing described above, the antenna direction calculation device 1 can, even when the state of radio wave propagation changes due to the atmospheric state, effortlessly calculate an appropriate antenna direction with little propagation loss or with an excellent reception sensitivity.

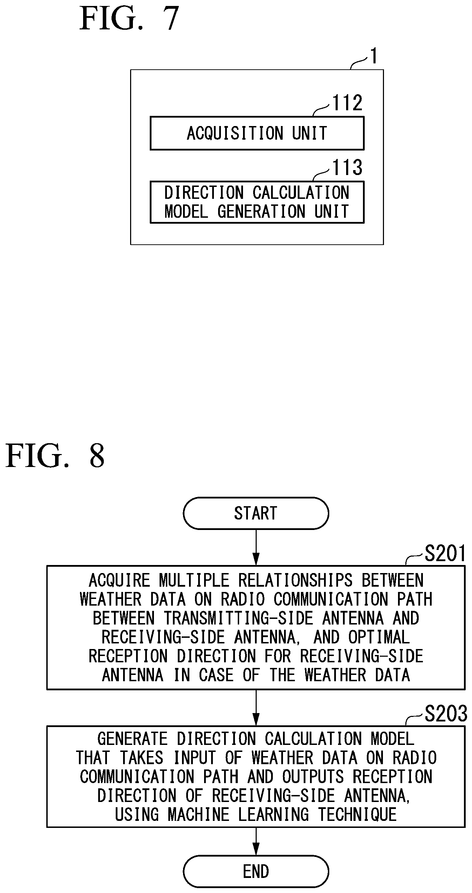

FIG. 7 shows a configuration example of the antenna direction calculation device according to the present example embodiment.

FIG. 8 shows a processing flow of the antenna direction calculation device shown in FIG. 7.

The antenna direction calculation device 1 includes at least the acquisition unit 112 and the direction calculation model generation unit 113.

The acquisition unit 112 acquires a plurality of relationships between: weather data on a radio wave communication path between the installation position of a transmitting-side antenna and the installation position of a receiving-side antenna; and an optimal reception direction for the receiving-side antenna in a case where the radio wave transmission direction of the transmitting-side antenna is a predetermined transmission direction and also where the weather data is observed (Step S801).

The direction calculation model generation unit 113 generates a direction calculation model that, upon receiving an input of weather data on the radio wave communication path, outputs a reception direction for the receiving-side antenna, using the plurality of relationships between: the weather data on the radio wave communication path; and the optimal reception direction for the receiving-side antenna in a case where the radio wave transmission direction of the transmitting-side antenna is the predetermined transmission direction and also where the weather data is observed, and a machine learning technique (Step S802).

Each device described above has a built-in computer system. The process of each processing described above is stored in a computer-readable recording medium in a form of a program, and the processing mentioned above is performed by a computer reading and executing the program. Here, the computer-readable recording medium refers to a magnetic disk, a magnetic optical disk, a CD-ROM, a DVD-ROM, a semiconductor memory, or the like. Moreover, the computer program may be distributed to a computer via a communication line, and the computer having received the distributed program may execute the program.

Also, this program may be a program for realizing some of the functions described above. Furthermore, the program may be a so-called difference file (a difference program) which can realize the functions described above in combination with a program already recorded in the computer system.

This application is based upon and claims the benefit of priority from Japanese patent application No. 2021-140184, filed August 30, 2021, the disclosure of which is incorporated herein in its entirety.

Industrial Applicability

The present disclosure may be applied to an antenna direction calculation device, a processing method, and a recording medium.

Description of Reference Symbols

1 Antenna direction calculation device
10, 20 Antenna
100 Radio communication system
111 Control unit
112 Acquisition unit
113 Direction calculation model generation unit
114 Recording unit
115 Direction calculation unit
116 Output unit

**Claims**

1. An antenna direction calculation device comprising:

   an acquisition means that acquires a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and a direction calculation model generation means that generates, using the plurality of relationships and a machine learning technique, a direction calculation model that, upon receiving an input of weather data on the radio wave communication path, outputs a reception direction for the receiving-side antenna, using the plurality of relationships and a machine learning technique.

2. The antenna direction calculation device according to claim 1, wherein the weather data on the radio wave communication path includes a refractive index of the radio wave in a tropospheric radio wave scattering space on the radio wave communication path.

3. The antenna direction calculation device according to claim 1 or 2, wherein the weather data on the radio wave communication path further includes weather data at a plurality of sites on the radio wave communication path.

4. The antenna direction calculation device according to any one of claims 1 to 3, wherein the weather data includes at least one of absolute temperature, atmospheric pressure, saturated water vapor pressure, and relative humidity.

5. The antenna direction calculation device according to any one of claims 1 to 4, further comprising:
   a direction calculation means that calculates a receiving direction for the receiving-side antenna, based on the weather data on the radio wave communication path and the direction calculating model.

6. The antenna direction calculation device according to claim 5, wherein the direction calculation means calculates a receiving direction for the receiving-side antenna, based on the weather data on the radio wave communication path and the direction calculating model that corresponds to a period indicating a current season.

7. The antenna direction calculation device according to any one of claims 1 to 6, wherein the direction calculation model generation means generates the direction calculating model for each period indicating a predetermined season.

8. A processing method comprising:

   acquiring a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and

generating, using the plurality of relationships and a machine learning technique, a direction calculation model that, upon receiving an input of weather data on the radio wave communication path, outputs a reception direction for the receiving-side antenna, using the plurality of relationships and a machine learning technique.

9. A recording medium that stores a program that causes a computer of an antenna direction calculation device to execute:

acquiring a plurality of relationships, each indicating a relationship between: weather data on a radio wave communication path between a transmitting-side antenna and a receiving-side antenna; and an optimal reception direction for the receiving-side antenna in a case of: a radio wave transmission direction of the transmitting-side antenna being a predetermined transmission direction; and the weather data; and

generating, using the plurality of relationships and a machine learning technique, a direction calculation model that, upon receiving an input of weather data on the radio wave communication path, outputs a reception direction for the receiving-side antenna, using the plurality of relationships and a machine learning technique.

FIG. 1

# FIG. 2

ANTENNA DIRECTION CALCULATION DEVICE ⌐1

| | |
|---|---|
| ⌐101 CPU | ⌐104 HDD |
| ⌐102 ROM | ⌐105 COMMUNICATION MODULE |
| ⌐103 RAM | ⌐106 DATABASE |

# FIG. 3

ANTENNA DIRECTION CALCULATION DEVICE ⌐1

⌐111 CONTROL UNIT

⌐112 ACQUISITION UNIT

⌐113 DIRECTION CALCULATION MODEL GENERATION UNIT

⌐114 RECORDING UNIT

⌐115 DIRECTION CALCULATION UNIT

⌐116 OUTPUT UNIT

# FIG. 4

REPEAT

**S41**
ACQUIRE INFORMATION OF COMBINATION OF TRANSMITTING-SIDE ANTENNA AND RECEIVING-SIDE ANTENNA

**S42**
ACQUIRE WEATHER DATA ON RADIO COMMUNICATION PATH BETWEEN TRANSMITTING-SIDE ANTENNA AND RECEIVING-SIDE ANTENNA, AND OPTIMAL RECEPTION DIRECTION FOR RECEIVING-SIDE ANTENNA IN CASE OF THE WEATHER DATA

**S43**
ACQUIRE TOPOGRAPHIC DATA

**S44**
GENERATE DIRECTION CALCULATION MODEL USING MACHINE LEARNING TECHNIQUE

**S45**
CALCULATE RECEIVING-SIDE ANTENNA RECEPTION DIRECTION BASED ON WEATHER DATA ON RADIO COMMUNICATION PATH BETWEEN TRANSMITTING-SIDE ANTENNA AND RECEIVING-SIDE ANTENNA AND DIRECTION CALCULATION MODEL

# FIG. 5

| TRANSMITTING-SIDE ANTENNA | RECEIVING-SIDE ANTENNA | TOPOGRAPHIC DATA | WEATHER DATA | RECEPTION DIRECTION OF RECEIVING-SIDE ANTENNA |
|---|---|---|---|---|
| | | | ... | ... |
| ... | ... | ... | ... | ... |
| | | | ... | ... |
| | | | ... | ... |
| ... | ... | ... | ... | ... |
| | | | ... | ... |
| | | | | |

# FIG. 6

```
                    ┌─────────────┐
                    │    START    │
                    └─────────────┘
                           │
                           ▼
        ┌──────────────────────────────────────┐
        │ ACQUIRE INFORMATION OF TRANSMITTING-SIDE│ ～S101
        │  ANTENNA AND RECEIVING-SIDE ANTENNA    │
        └──────────────────────────────────────┘
                           │
                           ▼
        ┌──────────────────────────────────────┐
        │      ACQUIRE INFORMATION OF           │ ～S102
        │     OPTIMAL RECEPTION DIRECTION       │
        └──────────────────────────────────────┘
                           │
                           ▼
        ┌──────────────────────────────────────┐
        │        ACQUIRE WEATHER DATA           │ ～S103
        └──────────────────────────────────────┘
                           │
                           ▼
        ┌──────────────────────────────────────┐
        │   RECORD INFORMATION OF TOPOGRAPHIC DATA│
        │ BETWEEN ANTENNAS, WEATHER DATA, AND OPTIMAL│ ～S104
        │  RECEPTION DIRECTION IN ASSOCIATION WITH │
        │       COMBINATION OF TRANSMITTING-SIDE │
        │   ANTENNA AND RECEIVING-SIDE ANTENNA  │
        └──────────────────────────────────────┘
                           │
                           ▼
        ┌──────────────────────────────────────┐
        │           DETECT START OF             │ ～S105
        │  DIRECTION CALCULATION MODEL GENERATION│
        └──────────────────────────────────────┘
                           │
                           ▼
        ┌──────────────────────────────────────┐
        │  GENERATE DIRECTION CALCULATION MODEL │ ～S106
        └──────────────────────────────────────┘
                           │
                           ▼
        ┌──────────────────────────────────────┐
        │   RECORD DIRECTION CALCULATION MODEL  │ ～S107
        │            IN DATA TABLE              │
        └──────────────────────────────────────┘
                           │
                           ▼
        ┌──────────────────────────────────────┐
        │       ACQUIRE INSTRUCTION TO START    │ ～S108
        │     ANTENNA DIRECTION CALCULATION     │
        └──────────────────────────────────────┘
                           │
                           ▼
        ┌──────────────────────────────────────┐
        │   ACQUIRE DIRECTION CALCULATION MODEL │ ～S109
        └──────────────────────────────────────┘
                           │
                           ▼
        ┌──────────────────────────────────────┐
        │ CALCULATE INFORMATION OF OPTIMAL ANTENNA│ ～S110
        │  DIRECTION FOR RECEIVING-SIDE ANTENNA │
        └──────────────────────────────────────┘
                           │
                           ▼
        ┌──────────────────────────────────────┐
        │  OUTPUT INFORMATION OF OPTIMAL ANTENNA│ ～S111
        │  DIRECTION FOR RECEIVING-SIDE ANTENNA │
        └──────────────────────────────────────┘
                           │
                           ▼
                    ┌─────────────┐
                    │     END     │
                    └─────────────┘
```

# FIG. 7

```
┌──────────────────────────────────────── 1
│
│   ┌──────────────────────────── 112
│   │      ACQUISITION UNIT      │
│   └────────────────────────────┘
│
│   ┌──────────────────────────── 113
│   │   DIRECTION CALCULATION    │
│   │   MODEL GENERATION UNIT    │
│   └────────────────────────────┘
│
└────────────────────────────────────────
```

# FIG. 8

```
                  ┌─────────────┐
                  │    START    │
                  └─────────────┘
                        │
                        ▼                        S201
  ┌────────────────────────────────────────────────┐
  │    ACQUIRE MULTIPLE RELATIONSHIPS BETWEEN        │
  │ WEATHER DATA ON RADIO COMMUNICATION PATH         │
  │   BETWEEN TRANSMITTING-SIDE ANTENNA AND          │
  │    RECEIVING-SIDE ANTENNA, AND OPTIMAL           │
  │  RECEPTION DIRECTION FOR RECEIVING-SIDE          │
  │    ANTENNA IN CASE OF THE WEATHER DATA           │
  └────────────────────────────────────────────────┘
                        │
                        ▼                        S203
  ┌────────────────────────────────────────────────┐
  │    GENERATE DIRECTION CALCULATION MODEL          │
  │ THAT TAKES INPUT OF WEATHER DATA ON RADIO        │
  │ COMMUNICATION PATH AND OUTPUTS RECEPTION         │
  │   DIRECTION OF RECEIVING-SIDE ANTENNA,           │
  │    USING MACHINE LEARNING TECHNIQUE              │
  └────────────────────────────────────────────────┘
                        │
                        ▼
                  ┌─────────────┐
                  │     END     │
                  └─────────────┘
```

## INTERNATIONAL SEARCH REPORT

| International application No. |
| --- |
| **PCT/JP2022/029776** |

| A. | CLASSIFICATION OF SUBJECT MATTER |
| --- | --- |

*H04B 17/30*(2015.01)i; *G01W 1/02*(2006.01)i
FI:   H04B17/30; G01W1/02 Z

According to International Patent Classification (IPC) or to both national classification and IPC

| B. | FIELDS SEARCHED |
| --- | --- |

Minimum documentation searched (classification system followed by classification symbols)

    H04B17/30; G01W1/02

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2016-171362 A (NEC CORP.) 23 September 2016 (2016-09-23)<br>entire text, all drawings | 1-9 |
| A | WO 2013/145663 A1 (NEC CORP.) 03 October 2013 (2013-10-03)<br>entire text, all drawings | 1-9 |
| A | US 2020/0336228 A1 (SPECTRUM EFFECT INC.) 22 October 2020 (2020-10-22)<br>entire text, all drawings | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/029776** |

| Patent document cited in search report | | | Publication date (day/month/year) | Patent family member(s) | | | Publication date (day/month/year) |
| --- | --- | --- | --- | --- | --- | --- | --- |
| JP | 2016-171362 | A | 23 September 2016 | (Family: none) | | | |
| WO | 2013/145663 | A1 | 03 October 2013 | US | 2015/0072634 | A1 | |
| | | | | entire text, all drawings | | | |
| | | | | EP | 2833560 | A1 | |
| US | 2020/0336228 | A1 | 22 October 2020 | (Family: none) | | | |

Form PCT/ISA/210 (patent family annex) (January 2015)

16

**EP 4 376 327 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014045285 A
- JP 2011234140 A
- JP 2021140184 A